# EUROPÄISCHE PATENTANMELDUNG

(11) **EP 3 492 159 A1**
(43) Veröffentlichungstag der Anmeldung: **05.06.2019**
(21) Anmeldenummer: 18183391.4
(22) Anmeldetag: 13.07.2018
(51) Int. Cl.: B01D 46/00, B01D 46/02, B01D 46/10, B01D 46/52, B60H 3/06

(54) **IN INTERIEURBAUTEIL INTEGRIERTE FILTERANORDNUNG FÜR EIN FAHRZEUG**

(71) Anmelder: Carl Freudenberg KG, 69469 Weinheim (DE)
(72) Erfinder: Stahl, Ulrich, 69514 Laudenbach (DE); Hemmerling, Judith, 75015 Bretten (DE); Krambs, Christoph, 69120 Heidelberg (DE); Kurtz, Oliver, 69231 Rauenberg (DE); Schöpping, Gerhard, 69469 Weinheim (DE); Gödicke, Birgit, 67283 Obrigheim (DE); Nosic, Alen, 68165 Mannheim (DE); Weik, Angela, 68782 Brühl (DE); Tapper, Renate, 64625 Bensheim (DE); Dawar, Saru, Michigan, 48170 (US); Stiborsky, Mark, 69469 Weinheim (DE); Arnold, Anette, 64342 Seeheim-Jugenheim (DE)

(57) **Zusammenfassung**

Die Erfindung betrifft eine Filteranordnung (10) für ein Fahrzeug (100) mit einem flächigem Filterelement (1), wobei das Filterelement (1) in Interieurbauteile des Fahrzeugs (100) integriert ist und wobei das Filterelement (1) eine dem Innenraum (5) des Fahrzeugs (100) zugewandte Oberfläche bildet. Das Filterelement (1) wird dabei von Luft angeströmt (8) oder durchströmt (7). In vorteilhafter Weise wird eine Filteranordnung für ein Fahrzeug geschaffen, wobei die Luftqualität im Innenraum der Fahrzeugkabine verbessert wird, und bei welcher die Luft gleichmäßig in die Fahrzeugkabine strömt, ohne dass die Luft als Zugluft wahrgenommen wird.

## Beschreibung

Die Erfindung betrifft eine Filteranordnung für ein Fahrzeug mit einem flächigem Filterelement.

### Stand der Technik

Aus dem Stand der Technik sind Innenraumluftfilter bekannt zur Filtration von in eine Fahrzeugkabine eines Fahrzeugs zugeführter Luft. Ein solcher Filter, der mehrere Filtrationsstufen aufweisen kann, ist in der EP 2 684 591 A1 beschrieben. Der Filter kann im Zuluftschacht der Belüftung bzw. der Klimaanlage des Fahrzeugs, d.h. beabstandet zum Fahrzeuginnenraum, eingesetzt werden.

Aus der DE 10 2005 026 556 A1 geht ein alternativer Ansatz hervor. Dabei werden die Filter direkt in Luftführungskanäle der Belüftung bzw. der Klimaanlage eines Fahrzeugs integriert.

Nachteilig an den aus dem Stand der Technik bekannten Lösungen ist, dass auf Grund des nur eingeschränkt verfügbaren Bauraumes nur punktuell Luft in den Innenraum der Fahrzeugkabine geleitet werden kann. Eine solch punktuelle Luftzufuhr kann von Fahrzeuginsassen als Zugluft verspürt und damit negativ wahrgenommen werden. Weiter nachteilig ist, dass neben der punktuellen Luftzufuhr in die Fahrzeugkabine auch nur eine punktuelle Luftansaugung von Frischluft (auch als Rohluft bezeichnet) erfolgt, zumeist im Bereich des Motorraumes oder des Unterbodens. Die Qualität der Rohluft in diesen Bereichen ist wegen Verunreinigung durch den Antriebsstrang, Reifenabrieb, Bremsstaub, etc. nicht gut.

### Aufgabenstellung

Aufgabe der vorliegenden Erfindung ist es, eine Filteranordnung für ein Fahrzeug zu schaffen, wobei die Luftqualität im Innenraum der Fahrzeugkabine verbessert wird und bei welcher die Luft einer Fahrzeugkabine zuverlässig gereinigt wird. Weitere Aufgabe ist es eine Filteranordnung für ein Fahrzeug zu schaffen, wobei die Luft gleichmäßig in die Fahrzeugkabine strömt, ohne dass die Luft als Zugluft wahrgenommen wird.

### Technische Lösung

Gelöst wird diese Aufgabe durch eine Filteranordnung mit den Merkmalen von Anspruch 1.

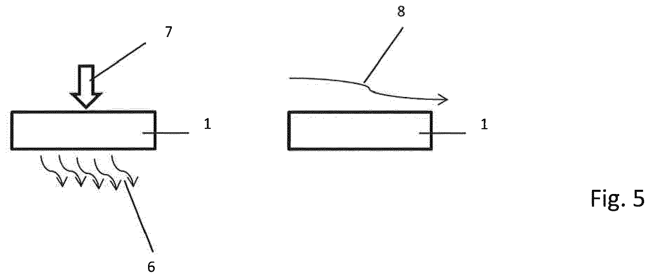

Die erfindungsgemäße Filteranordnung für die Fahrzeugkabine in einem Fahrzeug besitzt ein flächiges Filterelement. In vorteilhafter Weise ist das flächige Filterelement in Interieurbauteile des Fahrzeugs integriert und bildet eine dem Innenraum des Fahrzeugs zugewandte Oberfläche der Fahrzeugkabine aus. Flächig in diesem Zusammenhang meint nicht notwendigerweise eben. Das flächige Filterelement hat eine Erstreckung, welche größer ist als nur punktuelle Öffnung von (üblichen) Luftaustrittsströmern und -düsen in Fahrzeugkabinen von PKW im Bereich von ca. 100cm², und wird deshalb als flächig bezeichnet. Unter Fahrzeug wird in diesem Sinne eine Einrichtung mit einer Kabine zum Transport von mindestens einer Person verstanden. Ein Fahrzeug kann somit ein Personenkraftwagen, ein Nutzfahrzeug, ein Kabinenroller, ein Schiff, eine Bahn, ein Flugzeug oder ähnliches sein. Im Unterschied zu bekannten Luftfiltern in Fahrzeugen sitzt das Filterelement nicht an irgendeiner Stelle in der Luftzuführung zwischen Luftansaugung und Ausströmelement, sondern bildet selbst einen Teil einer Begrenzungsfläche des Innenraums aus. Es kann dabei eine Abdeckfläche für das Filterelement vorgesehen sein, wobei die Abdeckfläche beispielsweise durch einen Stoffbezug oder einen Vliesstoff gebildet werden kann. Einschränkungen für das Farbdesign oder das Materialdesign des Innenraumes bestehen somit nicht.
I). In einer ersten Ausführungsvariante der erfindungsgemäßen Filteranordnung wird das Filterelement von Luft durchströmt, d.h. Luft tritt durch die Strukturen des Filterelements hindurch, wird gefiltert, derart, dass es sich um einen aktiven Filter handelt, und die Luft tritt durch das Filterelement in den Innenraum des Fahrzeugs aus und gelangt so als gefilterte Luft in den Innenraum des Fahrzeuges. Ein aktives Filterelement ist grob schematisch in Figur 5 links dargestellt. Eine derartige Filteranordnung hat den Vorteil, dass dank der großen Ausströmfläche des flächigen Filterelements geringe Strömungsgeschwindigkeiten realisierbar sind, der in das Fahrzeug eintretende Luftstrom gleichmäßig verteilt werden kann und der Luftstrom nicht als unangenehme Zugluft empfunden wird. So kann in besonders vorteilhafter Weise über die gesamte Fläche des Filterelements ein Luftvorhang bzw. Luftteppich aus gereinigter Luft bereitgestellt werden. Ein Luftvorhang ist ein Bereich gerichteter Luftströmung. Durch vorteilhafte Anordnung des Luftvorhanges im Türbereich, d.h. im Bereich einer Türöffnung, kann eine Abschirmung zur Außenluft erzeugt und so die Temperatur und Luftfeuchte im Fahrzeuginnenraum stabil gehalten werden.
   Es wurde als vorteilhaft erkannt, das Filterelement so auszugestalten, dass das Filterelement mindestens eine Kammer aufweist, wobei die Kammer mit Zuluft beaufschlagbar ist. Sind mehrere Kammern vorhanden, so können diese getrennt oder mit einander mit einem Luftdurchlass verbunden sein. Insbesondere kann die Kammer durch einen zumindest teilweise luftdurchlässigen Luftschlauch, z.B. Vliesstoffschlauch, gebildet werden. Dieser ist kostengünstig herstellbar und kann einfach in Interieurbauteile des Fahrzeugs integriert werden.
   Auch kann das Filterelement der Filteranordnung mit einer Faltenstruktur strukturiert sein, z.B. plissiert. Alternativ kann die Faltenstruktur geprägt oder gewellt sein. Dadurch wird die Oberfläche des flächenförmigen Filterelements auf ein Vielfaches vergrößert und so die Filtrationsleistung weiter verbessert.
   Bei der ersten Ausführungsvariante der Filteranordnung kann es sich bei dem Interieurbauteil des Fahrzeugs in vorteilhafter Weise um ein Element der Verkleidung der Fahrzeugkabine, den Dachhimmel, eine Türverkleidung, das Armaturenbrett bzw. die Armaturentafel, einen Sitz, insbesondere die Rückseite oder Seitenfläche der Rückenlehne, eine Kopfstütze, eine Säulenverkleidung, die Hutablage, die Kofferraumabdeckung oder die Kofferraumauskleidung handeln. Besonders vorteilhaft erscheint die Integration des Filterelements in den Dachhimmel, wobei "Integration" in diesem Sinne auch umfasst, dass der Dachhimmel durch die Filteranordnung gebildet wird, da so allen in der Fahrzeugkabine des Fahrzeugs befindlichen Personen ein gleichmäßiger Luftstrom zur Verfügung gestellt werden kann, welcher nicht als Zugluft empfunden wird. Ein weiterer Vorteil dieser Ausgestaltung ist, dass die Ansaugung von Frischluft in die Dachbereiche des Fahrzeuges integriert werden kann, so dass die angesaugte Luft im Vergleich zum Stand der Technik weniger verunreinigt ist.
II). In einer zweiten Ausführungsvariante der erfindungsgemäßen Filteranordnung wird das flächige Filterelement von Luft angeströmt, jedoch nicht durchströmt, d.h. Luft strömt an dem Filterelement vorbei, so dass es sich um einen passiven Filter handelt. Ein passives Filterelement ist grob schematisch in Figur 5 rechts dargestellt. Das Filterelement kann leicht austauschbar ausgestaltet sein, so dass ein schneller Austausch des Filterelements möglich ist, wenn es seine Filtrationsaufgabe nicht mehr erfüllt.

In Weiterbildung dieser Filteranordnung besitzt das Filterelement ein adsorptives Filtermaterial und kann dazu insbesondere Aktivkohle aufweisen.

Das Interieurbauteil, in welches die Filteranordnung integriert ist, kann insbesondere der Dachhimmel, eine Fußmatte, eine Türverkleidung, eine Kofferraumabdeckung, eine Fläche eines Sitzes, ein Element der Armaturentafel bzw. des Armaturenbrettes oder ein Sonnenrollo der Fahrzeugkabine des Fahrzeugs sein.

In einer besonders vorteilhaften daher bevorzugten Weiterbildung dieses Filterelements ist das Filterelement als Rollenfilter ausgebildet. Unter einem Rollenfilter wird ein Bandfilter verstanden mit von einer ersten Rolle auf eine weitere Rolle ab- bzw. aufwickelbarem Filtermaterial in Form eines Bandes. Ist das Filtermaterial, welches eine dem Innenraum des Fahrzeugs zugewandte wirksame Oberfläche bildet, "verbraucht" und nimmt die Filtrationsaufgabe nicht mehr wahr, so kann das Band auf den Rollen einfach weiterbewegt und damit ausgetauscht werden.

Die beschriebene Erfindung und die beschriebenen vorteilhaften Weiterbildungen der Erfindung stellen auch in Kombination miteinandersoweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.
Es zeigen in schematischer Darstellung
- Fig. 1: Fahrzeug mit einer erfindungsgemäßen Filteranordnung der ersten Ausführungsvariante
- Fig. 2: Fahrzeug mit einer erfindungsgemäßen Filteranordnung gemäß der zweiten Ausführungsvariante
- Fig. 3: ein Detail des Filterelements der ersten Ausführungsvariante
- Fig. 4: eine alternative Ausgestaltung des Filterelements der ersten Ausführungsvariante
- Fig. 5: aktives und passives Filterelement in einer Prinzipdarstellung

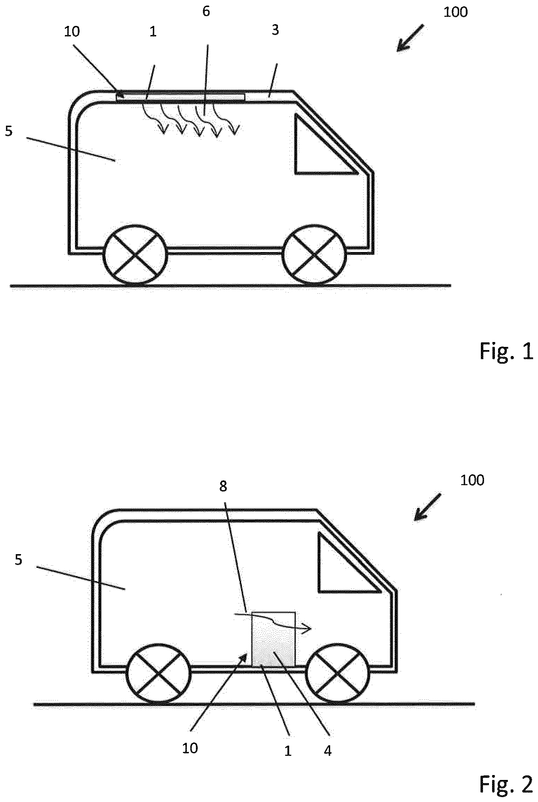

Figur 1 zeigt ein Fahrzeug 100 mit einer erfindungsgemäßen Filteranordnung 10 gemäß der ersten Ausführungsvariante. Die Filteranordnung 10 weist ein mit Zuluft 7 beaufschlagtes flächiges Filterelement 1 auf und ist hier beispielhaft in den Dachhimmel 3 des Fahrzeugs 100 integriert. Das flächige Filterelement 1 bildet im Bereich des Dachhimmels 3 eine dem Innenraum 5 des Fahrzeugs 100 zugewandte Oberfläche. Durch das flächige Filterelement 1 hindurch tritt ein Luftvorhang 6 aus gereinigter Luft in den Innenraum 5 des Fahrzeugs 100 ein.

Figur 2 zeigt ein Fahrzeug 100 mit einer Filteranordnung 10 in einer zweiten Ausführungsvariante. Als passiven Filter weist die Filteranordnung 10 dazu ein flächiges Filterelement 1 auf. Das flächige Filterelement 1 ist in eine Türverkleidung 4 des Fahrzeugs 100 integriert. Das Filterelement 1 bildet so eine dem Innenraum 5 des Fahrzeugs zugewandte Oberfläche. Das flächige Filterelement 1 weist in dieser Ausgestaltung ein adsorptives Filtermaterial auf, welches Aktivkohleanteile besitzt. Wird das flächige Filterelement 1 von Luft 8 angeströmt, so können dabei Gerüche und schädliche Gase adsorbiert werden. Die Luftqualität im Innenraum 5 des Fahrzeugs 100 kann so gesteigert werden.

Während in den Figuren 1 und 2 die beiden Ausführungsvarianten der Filteranordnung 10 als aktives bzw. passives Filterelement 1 separat dargestellt sind, ist auch eine Kombination von aktiven und passiven Filterelementen 1 in einem Fahrzeug 100 vorteilhaft.

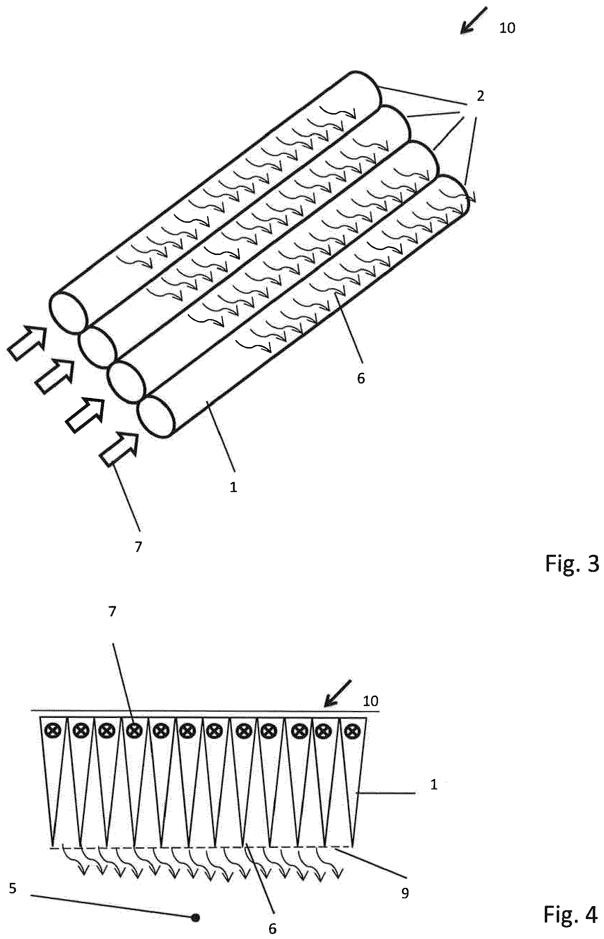

In Figur 3 ist eine mögliche Ausführungsform eines aktiven Filterelements 1 einer Filteranordnung 10 dargestellt. Das flächige Filterelement 1 weist eine Mehrzahl von Kammern 2 auf, welche z.B. als Vliesstoffschläuche ausgeführt sind. Eine jeweilige Kammer 2 ist an ihrem einen Ende offen, so dass dort ein Zuluftstrom 7 eintreten kann, und an ihrem anderen Ende geschlossen. Über die Fläche der teilweise luftdurchlässigen Kammern 2, nämlich über die Fläche welche dem Fahrzeuginnenraum zugewandt ist, tritt ein Luftvorhang bzw. Luftteppich 6 aus gereinigter Luft aus. Aufgrund der großen Ausströmfläche des Filterelements 1 kann bei geringer Strömungsgeschwindigkeit eine große Luftmenge in den Innenraum 5 eines Fahrzeugs 100 transportiert werden, so dass alle Bereiche des Innenraums 5 mit Luft versorgt werden können und der Luftvorhang 6 von Insassen des Fahrzeugs 100 nicht als Zugluft empfunden wird.

In Figur 4 ist eine weitere mögliche Ausführungsform eines aktiven Filterelements 1 einer Filteranordnung 10 dargestellt. Das flächige Filterelement 1 ist mit einer Faltenstruktur versehen und plissiert. Ein Zuluftstrom 7 wird z.B. zwischen Dachhimmel und Filterelement 1 eingeleitet, durchströmt das Filterelement 1 und tritt als Luftvorhang 6 aus. Aufgrund der großen Ausströmfläche des Filterelements 1 kann bei geringer Strömungsgeschwindigkeit eine große Luftmenge in den Innenraum 5 eines Fahrzeugs 100 transportiert werden, so dass alle Bereiche des Innenraums 5 mit Luft versorgt werden können und der Luftvorhang 6 von Insassen des Fahrzeugs 100 nicht als Zugluft empfunden wird. In Figur 4 ist des weiteren eine Abdeckfläche 9 des flächigen Filterelementes 1 angedeutet, welche z.B. durch eine Stoffbespannung gebildet werden kann und derart ausgeführt ist, dass ein Luftvorhang 6 austreten kann.

Solche Filteranordnungen 10 können, wie in Figur 1 dargestellt, als aktiver Filter in den Dachhimmel 3 eines Fahrzeugs 100 eingebaut und dort integriert werden. Alternativ ist auch eine Integration in andere Interieurbauteile des Fahrzeugs 100 denkbar, zum Beispiel in die Verkleidung der Fahrzeugkabine, in die Rückseite der Rückenlehne von Sitzen oder in Kopfstützen, in die Türverkleidung, in das Armaturenbrett, in eine Säulenverkleidung, in die Hutablage, die Kofferraumabdeckung oder die Kofferraumauskleidung.

### Bezugszeichenliste

- 1: flächiges Filterelement
- 2: Kammer (Luftschlauch)
- 3: Dachhimmel
- 4: Türverkleidung
- 5: Innenraum
- 6: Luftvorhang bzw. Luftteppich
- 7: Zuluftstrom
- 8: anströmende Luft

- 10: Filteranordnung

- 100: Fahrzeug

## Patentansprüche

1. Filteranordnung (10) für ein Fahrzeug (100) mit einem flächigem Filterelement (1), wobei das Filterelement (1) ein Filtermedium aufweist und in Interieurbauteile des Fahrzeugs (100) integriert ist und wobei das Filterelement (1) eine dem Innenraum (5) des Fahrzeugs (100) zugewandte Oberfläche bildet.

2. Filteranordnung nach Anspruch 1, **dadurch gekennzeichnet, dass**
das Filterelement (1) von Luft (7) durchströmt wird und die Luft (6) durch das Filterelement (1) in den Innenraum (5) des Fahrzeugs (100) austritt.

3. Filteranordnung nach Anspruch 2, **dadurch gekennzeichnet, dass**
das Filterelement (1) über seine Fläche einen Luftvorhang (6) bereitstellt.

4. Filteranordnung nach Anspruch 3, **dadurch gekennzeichnet, dass**
der Luftvorhang (6) im Türbereich angeordnet ist und eine Abschirmung zur Außenluft bereitstellt.

5. Filteranordnung nach einem der Ansprüche 2, 3 oder 4, **dadurch**
**gekennzeichnet, dass**
das Filterelement (1) mindestens eine Kammer (2) aufweist, wobei die Kammer (2) mit einer Zuluft (7) beaufschlagbar ist.

6. Filteranordnung nach Anspruch 5, **dadurch gekennzeichnet, dass**
die Kammer (2) durch einen zumindest teilweise luftdurchlässigen Vliesstoffschlauch gebildet wird.

7. Filteranordnung nach einem der vorangehenden Ansprüche, **dadurch**
**gekennzeichnet, dass**
das Filtermedium (1) mit einer Faltenstruktur strukturiert ist.

8. Filteranordnung nach einem der vorangehenden Ansprüche, **dadurch**
**gekennzeichnet, dass**
als Material für das Filtermedium (1) ein Vliesstoff, ein fester Filterkörper oder eine Materialschüttung eingesetzt wird.

9. Filteranordnung nach Anspruch 1, **dadurch gekennzeichnet, dass**
das Filterelement (1) von Luft (8) aus dem Innenraum (5) angeströmt wird.

10. Filteranordnung nach Anspruch 9, **dadurch gekennzeichnet, dass**
das Filterelement (1) ein adsorptives Filtermaterial besitzt und insbesondere Aktivkohle aufweist.

11. Filteranordnung nach einem der Ansprüche 9 bis 10, **dadurch**
**gekennzeichnet, dass**
das Interieurbauteil eine Fußmatte oder ein Sonnenrollo ist.

12. Filterelement nach einem der Ansprüche 8 bis 9, **dadurch**
**gekennzeichnet, dass**
das Filterelement (1) als Rollenfilter ausgebildet ist.

13. Filteranordnung, nach einem der Ansprüche 1 - 10 **dadurch**
**gekennzeichnet, dass**
das Interieurbauteil ein Element der Verkleidung der Fahrzeugkabine, der Dachhimmel, eine Türverkleidung, die Kofferraumauskleidung, eine Säulenverkleidung, das Armaturenbrett, ein Sitz, insbesondere die Rückseite oder Seitenfläche der Rücklehne des Sitzes, eine Kopfstütze, die Hutablage, oder die Kofferraumabdeckung ist.
